# EUROPÄISCHE PATENTSCHRIFT

(11) **EP 3 766 841 B1**
(45) Veröffentlichungstag und Bekanntmachung des Hinweises auf die Patenterteilung: **28.02.2024**
(21) Anmeldenummer: 19189575.4
(22) Anmeldetag: 01.08.2019
(51) Int. Cl.: C03B 23/07, C03B 37/012, C03B 37/027

(54) **VERFAHREN ZUR HERSTELLUNG EINER HOHLKERNFASER UND ZUR HERSTELLUNG EINER VORFORM FÜR EINE HOHLKERNFASER**
METHOD FOR PRODUCING A HOLLOW CORE FIBRE AND FOR PRODUCING A PREFORM FOR A HOLLOW CORE FIBRE
PROCÉDÉ DE FABRICATION D'UNE FIBRE À COEUR CREUX ET D'UNE PRÉFORME DE FIBRE À COEUR CREUX

(30) Priorität: 17.07.2019 US 201962875303 P
(43) Veröffentlichungstag der Anmeldung: 20.01.2021
(73) Patentinhaber: Heraeus Quarzglas GmbH & Co. KG, 63450 Hanau (DE); Heraeus Quartz North America LLC, US-Buford GA 30518 (US)
(72) Erfinder: ROSENBERGER, Manuel, 63450 Hanau (DE); VYDRA, Jan, 63450 Hanau (DE); CHANG, Kai Huei, Buford, GA Georgia 30518 (US); MA, Qiulin, Buford, GA Georgia 30518 (US)
(74) Vertreter: Staudt, Armin Walter

(56) Entgegenhaltungen:
- WO-A2-02/072489
- US-A1- 2006 130 528
- A F KOSOLAPOV ET AL: "Hollow-core revolver fibre with a double-capillary reflective cladding", QUANTUM ELECTRONICS., Bd. 46, Nr. 3, 29. März 2016 (2016-03-29), Seiten 267-270, XP055502520, GB ISSN: 1063-7818, DOI: 10.1070/QEL15972

## Beschreibung

### Technischer Hintergrund

Die Erfindung betrifft ein Verfahren zur Herstellung einer Antiresonanten Hohlkernfaser, die einen sich entlang einer Faser-Längsachse erstreckenden Hohlkern und einen den Hohlkern umgebenden Mantelbereich, der eine Anzahl von Antiresonanzelementen umfasst, mit den Verfahrensschritten:
(a) Bereitstellen einer primären Vorform für die Hohlkernfaser, die mindestens ein Hüllrohr, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bildung einer Anzahl von Vorstufen für Antiresonanzelemente an Soll-Positionen der Hüllrohr-Wandung, und
(c) Elongieren der primären Vorform zu der Hohlkernfaser oder Weiterverarbeitung der primären Vorform zu einer sekundären Vorform, aus der die Hohlkernfaser gezogen wird, wobei die Weiterverarbeitung eine einmalige oder wiederholte Durchführung von einem oder mehreren der folgenden Heißformprozesse umfasst:
   (i) Elongieren,
   (ii) Kollabieren,
   (iii) Kollabieren und gleichzeitiges Elongieren,
   (iv) Aufkollabieren von zusätzlichem Mantelmaterial,
   (v) Aufkollabieren von zusätzlichem Mantelmaterial und anschließendes Elongieren,
   (vi) Aufkollabieren von zusätzlichem Mantelmaterial und gleichzeitiges Elongieren.

Außerdem betrifft die Erfindung ein Verfahren zur Herstellung einer Vorform für eine Antiresonante Hohlkernfaser, die einen sich entlang einer Faser-Längsachse erstreckenden Hohlkern und den Hohlkern umgebenden Mantelbereich aufweist, der mehrere Antiresonanzelemente umfasst, mit den Verfahrensschritten:
(a) Bereitstellen einer primären Vorform für die Hohlkernfaser, die mindestens ein Hüllrohr, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bildung einer Anzahl von Vorstufen für Antiresonanzelemente an Soll-Positionen der Hüllrohr-Wandung,
(c) Optionale Weiterverarbeitung der primären Vorform zu einer sekundären Vorform für die Hohlkernfaser, wobei die Weiterverarbeitung eine einmalige oder wiederholte Durchführung von einem oder mehreren der folgenden Heißformprozesse umfasst:
   (i) Elongieren,
   (ii) Kollabieren,
   (iii) Kollabieren und gleichzeitiges Elongieren,
   (iv) Aufkollabieren von zusätzlichem Mantelmaterial,
   (v) Aufkollabieren von zusätzlichem Mantelmaterial und anschließendes Elongieren,
   (vi) Aufkollabieren von zusätzlichem Mantelmaterial und gleichzeitiges Elongieren.

Herkömmliche Monomode-Lichtleitfasern aus Vollmaterial haben einen Kernbereich aus Glas, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.

Diese Nachteile vermeiden oder verringern "Hohlkernfasern", bei denen der Kern einen evakuierten, mit Gas oder Flüssigkeit gefüllten Hohlraum umfasst. In Hohlkernfasern ist die Wechselwirkung des Lichtes mit dem Glas geringer als in Vollkernfasern. Der Brechungsindex des Kerns ist kleiner als der des Mantels, so dass eine Lichtleitung durch Totalreflexion nicht möglich ist und das Licht normalerweise aus dem Kern in den Mantel entweichen würde. In Abhängigkeit vom physikalischen Mechanismus der Lichtleitung werden Hohlkernfasern unterteilt in "photonische Bandlückenfasern" und "Antiresonanz-Reflexionsfaser".

Bei "photonischen Bandlückenfasern" ist der hohle Kernbereich von einem Mantel umgeben, in dem kleine Hohlkanäle periodisch angeordnet sind. Die periodische Struktur der Hohlkanäle im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.

Bei der als "Antiresonante Hohlkernfaser" ("antiresonant hollow-core fibers"; AR-HCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.

Potentielle Anwendungen der Hohlkernfasern liegen auf dem Gebiet der Datenübertragung, der Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

### Stand der Technik

Ein Nachteil Antiresonanter Hohlkernfasern liegt darin, dass Moden höherer Ordnung nicht zwangsläufig unterdrückt werden, so dass sie über große Übertragungslängen häufig nicht rein einmodig sind und sich die Qualität des Ausgangsstrahls verschlechtert.

Im Paper von Francesco Poletti "Nested antiresonant nodeless hollow core fiber"; Optics Express, Vol. 22, No. 20 (2014); DOI: 10.1364/OE 22.023807, wird ein Faserdesign vorgeschlagen, bei dem Antiresonanzelemente nicht als einfaches singuläres Strukturelement ausgebildet sind, sondern sich aus mehreren, miteinander verschachtelten (englisch: nested) Strukturelementen zusammensetzen. Die verschachtelten Antiresonanzelemente sind so ausgelegt, dass Kernmoden höherer Ordnung phasenangepasst an die Mantelmoden sind und unterdrückt werden, aber nicht die fundamentale Kernmode. Dadurch ist die Ausbreitung der fundamentalen Kernmode stets gewährleistet und die Hohlkernfaser kann über einen begrenzten Wellenlängenbereich effektiv einmodig gemacht werden.

Die effektive Modenunterdrückung hängt von der Mittenwellenlänge des übertragenen Lichts und von Strukturparametern des Faserdesigns ab, wie dem Radius des Hohlkerns und der Durchmesserdifferenz von verschachtelten Ringstrukturen in den Antiresonanzelementen.

Aus der EP 3 136 143 A1 ist eine Antiresonante Hohlkernfaser bekannt (dort bezeichnet als "Hohlkernfaser ohne Bandlücke"), bei der der Kern neben der Fundamentalmode noch weitere Moden leiten kann. Zu diesem Zweck ist er von einem inneren Mantel mit "nicht-resonanten Elementen" umgeben, die eine Phasenanpassung von antiresonanten Moden mit den höheren Moden liefern. Die Herstellung der Hohlkernfaser erfolgt nach einer sogenannten "stack-and-draw-Technik", indem die Ausgangselemente zu einem achsenparallelen Ensemble angeordnet und zu einer Vorform fixiert werden und die Vorform anschließend elongiert wird. Hierbei wird ein Hüllrohr mit hexagonalem Innenquerschnitt verwendet und in den Innenkanten des Hüllrohres werden sechs sogenannte "ARE-Vorformen" (Anti-Resonanz-Element-Vorformen) fixiert. Diese Vorform wird in zwei Stufen zu einer Hohlkernfaser ausgezogen.

Aus der WO 2018/169487 A1 ist ein Verfahren zur Herstellung einer Vorform für antiresonante Hohlkernfasern bekannt, bei dem ein erster Mantelbereich eine Vielzahl an Stäben und ein zweiter Mantelbereich eine Vielzahl von Rohren umfasst, die von einem äußeren Hüllrohr umgeben sind. Stäbe, Rohre und Hüllrohr werden mittels "Stack and draw"-Technik zur Bildung einer Vorform zusammengefügt. Vor dem Elongieren der Vorform wird das Vorformende versiegelt, was durch Aufbringen einer Siegelmasse geschieht. Als Siegelmasse wird beispielsweise ein UV-Kleber eingesetzt.

A.F. Kosolapov et al.: "Hollow-core revolver fibre with a double¬capillary reflective cladding", Quantum Electronics, Vol. 46., No. 3, 29. March 2016 (2016-03-29), Pages 267-270, DOI: 10.1070/QEL15972, beschreibt ein Verfahren zur Herstellung einer Antiresonanten Hohlkernfaser durch Bereitstellen eines Hüllrohres und einer Anzahl von Antiresonanzelement-Vorformlingen, die als Doppelrohr aus ARE-Außenrohr und einem an dessen Innenwandung angeschweißtem ARE-Innenrohr zusammengesetzt sind. Das Doppelrohr wird in einem Ziehofen elongiert und zeigt danach einen ovalen Querschnitt. Fünf der ovalen Doppelrohre werden an der Innenseite des Hüllrohres montiert. Die Doppelrohre werden anschließend mit der Hüllrohr-Innenseite verschweißt. Die so erzeugte primäre Vorform wird zu einer sekundären Vorform elongiert und daraus die Hohlkernfaser gezogen.

Die WO 2002/072489 A2 beschreibt ein Verfahren zur Herstellung einer mikrostrukturierten optischen bei der ein Glasrohr mit Längsrillen oder -schlitzen zur Ausbildung von Hohlkanälen eingesetzt wird. Die Längsrillen oder -schlitze können durch mechanische Bearbeitung erzeugt werden.

Die US 2006/0130528 A1 schlägt zur Herstellung einer mikrostrukturierten optischen Faser vor, einen mit Längsnuten versehenen Basiskörper mit einem Hüllrohr zu umgeben.

### Technische Aufgabenstellung

Antiresonante Hohlkernfasern und insbesondere solche mit verschachtelten Strukturelementen haben komplexe Innengeometrien, was ihre exakte und reproduzierbare Herstellung erschwert. Dies gilt umso mehr, da zur Einhaltung der Resonanzbeziehungsweise Antiresonanzbedingungen bereits geringe Maßabweichungen in der Größenordnung der Arbeitswellenlänge des zu führenden Lichts nicht tolerierbar sind. Abweichungen von der Soll-Geometrie können ihre Ursache bei der Konfiguration der Faser-Vorform haben, und sie können auch durch ungewollte nichtmaßstäbliche Verformungen beim Faserziehprozess auftreten.

Bei der bekannten "Stack-and-Draw"-Technik sind viele Elemente positionsgenau zusammenzufügen. Beispielsweise müssen zur Herstellung der aus dem eingangs genannten Paper bekannten Hohlkernfaser im "NANF"-Design sechs Antiresonanzelement-Vorformlinge, jeweils bestehend aus einem Antiresonanzvorformling-Außenrohr (kurz: ARE-Außenrohr) und einseitig an der Innenmantelfläche des ARE-Außenrohres-eingeschweißtem Antiresonanzvorformling-Innenrohr (kurz: ARE- Innenrohr), an der Innenseite eines Hüllrohres angebracht werden.

Zur Realisierung geringer Dämpfungswerte und breiter Transmissionsbereiche ist neben einer gleichmäßigen Wandstärke der Wandungen der Antiresonanzelemente auch die azimutale Position der Antiresonanzelemente innerhalb des Hüllrohres wichtig. Dies ist mit der "Stack-and-Draw"-Technik nicht ohne Weiteres zu realisieren. Ziel der Erfindung ist, ein Verfahren zur kostengünstigen Herstellung einer Antiresonanten Hohlkernfaser anzugeben, das Beschränkungen herkömmlicher Herstellungsverfahren vermeidet.

Insbesondere ist es Ziel der Erfindung, ein Verfahren zur Herstellung einer Antiresonanten Hohlkernfaser und einer Vorform für Antiresonante Hohlkernfasern bereitzustellen, mit dem reproduzierbar eine hohe Präzision der Strukturelemente und eine exakte Positionierung der Antiresonanzelemente in der Faser in einer ausreichend stabilen und reproduzierbaren Weise erreicht werden kann.

Außerdem sollen Nachteile der klassischen "Stack and Draw"-Technik, mit der die erforderlichen Strukturgenauigkeiten, insbesondere eine gleichmäßige Wandstärke der Antiresonanzelemente und eine exakte Positionierung an vorgegebenen azimutalen Positionen nicht einfach zu erreichen ist, möglichst vermieden werden.

### Zusammenfassung der Erfindung

Hinsichtlich der Herstellung der Antiresonanten Hohlkernfaser wird diese Aufgabe ausgehend von einem Verfahren der eingangs genannten Gattung erfindungsgemäß dadurch gelöst, dass die Bildung der Antiresonanzelement-Vorstufen die Ausbildung langgestreckter Druckkammern umfasst, die jeweils im Bereich der Soll-Positionen der Antiresonanzelemente an eine unter Druck und Hitze verformbare Wandung angrenzen, und die bei Durchführung eines Prozesses gemäß Verfahrensschritt (c) infolge von Druck und Hitze eine Ausstülpung eines Abschnitts der verformbaren Wandung in Richtung der Hüllrohr-Innenbohrung unter Bildung eines Antiresonanzelements oder eines Vorläufers dafür bewirken, wobei die verformbare Wandung als Wandungsabschnitt eines Glasrohres und die Druckkammern jeweils als Hohlkanal ausgelegt sind, an den der Wandungsabschnitt angrenzt.

Ausgangspunkt für die Herstellung der Antiresonanten Hohlkernfaser ist eine Vorform, die hier auch als "Cane" oder als "primäre Vorform" bezeichnet wird. Sie umfasst ein Hüllrohr, in dem oder an dem Vorstufen oder Vorformlinge für die Ausformung Antiresonanter Elemente in den Hohlkernfasern (hier kurz als "Antiresonanzelemente" bezeichnet) enthalten sind. Die primäre Vorform kann zu der Hohlkernfaser elongiert werden; in der Regel wird der primären Vorform aber zusätzliches Mantelmaterial hinzugefügt, um daraus eine hier als "sekundäre Vorform" bezeichnete Vorform zu erzeugen. Gegebenenfalls wird die Hohlkernfaser durch Elongieren der sekundären Vorform erzeugt. Alternativ werden die primäre Vorform oder die sekundäre Vorform unter Ausbildung eines koaxialen Ensembles von Bauteilen mit einem Überfangzylinder oder mit mehrere Überfangzylindern umgeben und das koaxiale Ensemble direkt zu der Hohlkernfaser elongiert. Der allgemeine Begriff "Vorform" wird hier zur Bezeichnung desjenigen Bauteils oder desjenigen koaxialen Ensembles von Bauteilen verstanden, aus der die Hohlkernfaser letztlich gezogen wird.

Die Genauigkeit der Positionierung der Antiresonanzelemente wird verbessert, indem die Vorstufen für Antiresonanzelemente in Form von langgestreckten und als Hohlkanäle ausgeführten Druckkammern ausgeführt werden, die im Bereich der Soll-Positionen der Antiresonanzelemente ausgebildet werden. Die Druckkammern sind dazu ausgelegt, die daran angrenzenden Wandungsabschnitte des inneren Hüllrohres in Richtung der Hüllrohr-Längsachse umzustülpen, wenn diese Wandungsabschnitte erweicht sind und in den Druckkammern ein Gasdruck angelegt wird.

Die betreffenden, umzustülpenden Wandungsabschnitte der verformbaren Wandung sind langgestreckt und verlaufen entlang der Druckkammern und der Soll-Positionen der Antiresonanzelement-Vorstufen in der Vorform. Im einfachsten und Folgenden näher betrachteten Fall gehören die umzustülpenden Wandungsabschnitte der verformbaren Wandung zu einem Glasrohr.
- Die Druckkammern sind bei einer ersten bevorzugten Verfahrensvariante innerhalb der Wandung des Glasrohres ausgebildet; sie bilden in dem Fall Hohlkanäle, die parallel zur Glasrohr-Längsachse von einem Ende zum anderen Ende der Glasrohr-Wandung verlaufen und die vollständig vom Glas des Glasrohres begrenzt sind.
- Die Druckkammern werden bei einer anderen bevorzugten Verfahrensvariante durch ein separates Bauteil bereitgestellt, das an die Außenmantelfläche der GlasrohrWandung angrenzt. Sie bilden in dem Fall Hohlkanäle, die parallel zur Glasrohr-Längsachse von einem Ende zum anderen Ende entlang der Glasrohr-Wandung verlaufen und die an einer Seite vom Glas des Glasrohres begrenzt sind.
- Die Druckkammern sind bei einer weiteren bevorzugten Verfahrensvariante in Ausnehmungen der Außenmantelfläche der Glasrohr-Wandung ausgebildet; sie bilden in dem Fall ebenfalls Hohlkanäle, die parallel zur Glasrohr-Längsachse von einem Ende zum anderen Ende entlang der Glasrohr-Wandung verlaufen und vom Glas des Glasrohres im Bereich der Ausnehmung begrenzt sind.

Diese Verfahrensvarianten sind auch untereinander kombinierbar. Damit in die Hohlkanäle ein Druckgas eingeleitet werden kann, sind sie an einem Ende offen, vorteilhafterweise - auch aus Fertigungsaspekten - sind sie an beiden Enden offen.

Die Antiresonanzelement-Vorstufen werden an diesen Positionen in einem Fertigungsschritt erzeugt, indem die betreffenden Wandungsabschnitte in Richtung der Glasrohr-Innenbohrung durch Anlegen eines von der Glasrohr-Außenseite wirkenden Drucks umgestülpt werden. Dies kann beispielsweise beim Elongieren der Vorform zur Hohlkernfaser oder zu einem Halbzeug erfolgen.

Eine Positionierung und Fixierung vorgefertigter Antiresonanzelement-Vorformlingen an den betreffenden Positionen der Hüllrohr-Innenwandung - wie bei der Stack-and-Draw-Technik bekannt - kann so vollständig entfallen oder die Anzahl der so zu positionierenden Antiresonanzelement-Vorformlinge kann zumindest verringert werden.

Mit der Erfindung können Antiresonante Hohlkernfasern sowie Vorformen dafür präzise und reproduzierbar hergestellt werden.

Die Druckkammern sind als Hohlkanäle ausgelegt, an die die zu verformenden Wandungsabschnitte eines Glasrohres angrenzen.

Die Hohlkanäle bilden Druckkammern, in die in einem Fertigungsschritt ein Druckgas eingeleitet werden kann, so dass die dem Druckgas zugänglichen Wandungsabschnitte des Glasrohres infolge des Gasdrucks verformt werden.

Bei einigen der oben bereits erwähnten bevorzugten Verfahrensweisen sind innerhalb der Rohrwandung des Glasrohres Hohlkanäle ausgebildet, die parallel zur Glasrohr-Längsachse verlaufen.

Der Querschnitt der Hohlkanäle kann rund oder polygonal sein, insbesondere dreieckig oder rechteckig. Bei Hohlkanälen mit Rechteckform verläuft die lange Rechteckseite tangential zum umzuformenden (auszustülpenden) Wandungsabschnitt. Bei Hohlkanälen mit Dreieckform verläuft eine der Dreieckseiten tangential zum umzuformenden (auszustülpenden) Wandungsabschnitt. Dadurch wirkt der Gasdruck stärker auf diesen Wandungsabschnitt als in anderen Richtungen.

Insbesondere zur Herstellung komplex geformter Antiresonanzelement-Vorformlinge mit verschachtelten Rohrelementen hat sich dabei eine Verfahrensvariante als günstig erwiesen, bei der eine koaxiale Rohr-Anordnung gebildet wird, umfassend eine innere periphere Reihe von Hohlkanälen in der Rohrwandung eines inneren Glasrohres und eine äußere periphere Reihe von Hohlkanälen in der Rohrwandung eines äußeren Glasrohres, wobei die Hohlkanäle der inneren und der äußeren peripheren Reihe in radialer Richtung auf einer gemeinsamen Verbindungslinie liegen und durch mindestens eine peripher umlaufende und nach innen verformbare Glaswandung räumlich voneinander getrennt sind.

Die peripher umlaufende Glaswandung trennt die Druckräume der inneren und äu-βeren periphereren Hohlkanal-Reihen voneinander und sie wird beim Heißverformungsprozess durch die Hohlkanäle der äußeren periphereren Reihe nach innen umgestülpt. Gehört die peripher umlaufende Glaswandung zum inneren Glasrohr, so kann die Verformung des äußeren Glasrohres in eine Ausstülpung des inneren Glasrohres hinein erfolgen, wodurch ein Antiresonanzelement-Vorformling für eine verschachteltes Antiresonanzelement erzeugt wird.

Eine andere besonders elegante Verfahrensweise zur Ausbildung der Hohlkanäle umfasst eine Maßnahme, bei der zwischen dem Glasrohr und einem Außenrohr ein Zwischenrohr angeordnet wird, das eine Zwischenrohr-Längsachse aufweist, entlang der sich eine von einer Innenseite und einer Außenseite begrenzte Zwischenrohr-Wandung erstreckt, wobei in der Zwischenrohr-Wandung Längsschlitze eingebracht sind, wobei aus den Längsschlitzen bei Durchführung eines Prozesses gemäß Verfahrensschritt (c) Hohlkanäle gebildet werden, über den in einem späteren Fertigungsschritt Druck auf die Außenseite des Glasrohres aufgebracht werden kann, um erweichtes Material des Glasrohres in Richtung auf dessen Innenbohrung auszustülpen.

Die Längsschlitze durchdringen die Wandung des Zwischenrohres (vorzugsweise mit Ausnahme der beiden stirnseitigen Endbereiche). Sie haben parallele Längskanten.

Das Zwischenrohr kann an der Außenwandung des Glasrohres anliegen und mit diesem verschmolzen sein, und es kann an der Innenwandung des Außenrohres anliegen und mit diesem verschmolzen sein. Die Längsschlitze befinden sich zwischen dem Glasrohr und dem Außenrohr an den Positionen der umzustülpenden Glasrohr-Wandungsabschnitte. Sie bilden dort Hohlkanäle oder Vorstufen von Hohlkanälen, über die in einem späteren Fertigungsschritt Druck auf die Außenseite des Glasrohres aufgebracht werden kann, um so das erweichte Material des Glasrohres in Richtung auf dessen Innenbohrung umzustülpen. Dabei werden die Hohlkanäle in die langgestreckten Ausstülpungen verformt.

Ein Vorteil dieser Ausführungsform liegt darin, dass der Abstand der Hohlkanäle zur Innenbohrung über ihre Länge und untereinander besonders gleichmäßig wird.

Vorteilhafterweise wird bei Durchführung eines Heißformprozesses gemäß Verfahrensschritt (c) in den Hohlkanälen durch Einleiten eines Druckgases ein Innendruck erzeugt, und dadurch werden die Wandungsabschnitte des Glasrohres, die durch die Längsschlitze dem Druckgas zugänglich sind, verformt. Dabei bilden sich nach innen - in Richtung auf die Glasrohr-Innenbohrung und in Richtung auf den Hohlkern - weisende, längliche Ausbuchtungen am Glasrohr, die als Antiresonanzelement-Vorformlinge oder als Antiresonanzelemente dienen.

Die Längsschlitze enden vorzugsweise vor den stirnseitigen Enden des Zwischenrohres, um den Zusammenhalt der verbleibenden Längsstege zu gewährleisten.

Insbesondere zur Herstellung komplex geformter Antiresonanzelement-Vorformlinge mit verschachtelten Rohrelementen hat sich dabei eine Verfahrensvariante als günstig erwiesen, bei der eine koaxiale Rohr-Anordnung gebildet wird, umfassend ein inneres Glasrohr, ein inneres Zwischenrohr, ein inneres Außenrohr, das gleichzeitig ein äußeres Glasrohr bildet, ein äußeres Zwischenrohr und ein äußeres Außenrohr, wobei die Längsschlitze des inneren und des äußeren Zwischenrohres in radialer Richtung auf einer gemeinsamen Verbindungslinie liegen und durch mindestens eine peripher umlaufende und nach innen verformbare Glaswandung räumlich voneinander getrennt sind.

Derartige koaxiale Rohr-Anordnungen dienen dazu mindestens zwei Hohlkanäle beziehungsweise Druckkammern zu erzeugen, die in radialer Richtung gesehen paarweise hintereinander angeordnet sind. Die peripher umlaufende Glaswandung trennt die Druckräume der inneren und äußeren periphereren Hohlkanal-Reihen voneinander und sie wird beim Heißverformungsprozess durch die Hohlkanäle der äußeren periphereren Reihe nach innen umgestülpt. Gehört die peripher umlaufende Glaswandung zum inneren Glasrohr, so kann die Verformung des äußeren Glasrohres in eine Ausstülpung des inneren Glasrohres hinein erfolgen, wodurch ein Antiresonanzelement-Vorformling für eine verschachteltes Antiresonanzelement erzeugt wird.

Vorzugsweise wird ein Zwischenrohr mit kreisrundem Innenquerschnitt bereitgestellt und spanend bearbeitet. Die Längsschlitze sind in radialer Richtung durchgehend ausgeführt und lassen sich dabei einfach und genau fertigen; beispielsweise durch Fräsen, Bohren oder Einschneiden. Die Innengeometrie der Längsschlitze oder -rillen ist beispielsweise rechteckig oder v-förmig.

Die Längsschlitze werden bevorzugt durch spanende Bearbeitung der Zwischenrohr-Wandung, insbesondere durch Schneiden, Bohren, Sägen, Fräsen oder Schleifen, erzeugt.

Unter spanender Bearbeitung werden abtragende mechanische Bearbeitungstechniken wie etwa Drehen, Scheiden, Bohren, Sägen, Fräsen oder Schleifen verstanden. Diese Bearbeitungstechniken liefern im Vergleich zu anderen bekannten Umformtechniken unter Einsatz von Hitze und Druck genauere und filigranere Strukturen und sie vermeiden Verunreinigungen der Oberflächen durch Formwerkzeuge, wie beispielsweise Düsen, Pressen oder Schmelzformen.

Es hat sich bewährt, wenn die Längsschlitze Längskanten aufweisen und das Glasrohr und das Außenrohr mit den Längskanten durch Erweichen verbunden wird.

Dafür wird das koaxiale Rohrensemble aus Außenrohr, längsgeschlitztem Zwischenrohr und Glasrohr erhitzt und dabei werden die Schnittkanten der Längsschlitze über ihre gesamte Länge mit der Außenwandung des Glasrohres und mit der Innenwandung des Außenrohres verbunden. Durch eine gleichzeitige Längung werden unerwünschte Verformungen in radialer Richtung unterdrückt. Alternativ werden die Rohre in zwei Prozessschritten nacheinander paarweise miteinander verbunden.

Auf diese Weise wird eine Vorform erhalten, in der die ursprünglichen Längsschlitze als Hohlkanäle eingeschlossen sind. Sie können einseitig oder beidseitig durch Entfernen der geschlossenen stirnseitigen Endbereiche der Vorform freigelegt werden.

Anstelle oder ergänzend zu den oben erläuterten Verfahrensweisen zur Ausbildung der Hohlkanäle hat es sich auch bewährt, wenn die Ausbildung der Hohlkanäle eine Maßnahme umfasst, bei der ein Glasrohr eingesetzt, das eine Glasrohr-Außenmantelfläche aufweist, in die Längsrillen eingebracht sind, die parallel zu Glasrohr-Längsachse verlaufen, und/oder wenn ein Zwischenrohr eingesetzt wird, welches das Glasrohr koaxial umgibt, wobei an der Zwischenrohr-Innenmantelfläche Längsrillen eingebracht sind, die die parallel zu der Zwischenrohr-Längsachse verlaufen, wobei aus den Längsrillen bei Durchführung eines Prozesses gemäß Verfahrensschritt (c) Hohlkanäle gebildet werden.

Die Längsrillen in der Außenmantelfläche des Glasrohres bilden im Zusammenspiel mit einer das Glasrohr umgebenden Rohrwandung ebenfalls Kanäle und damit Druckkammern zur Verformung der Wandungsabschnitte, in denen die Längsrillen verlaufen. Die Längsrillen an der Innenmantelfläche des Zwischenrohre dienen zur Ausbildung der Hohlkanäle in ähnlicher Weise wie die Längsschlitze des Zwischenrohres, wie oben eingehend erläutert.

Zur Druckbeaufschlagung ist es hilfreich, wenn die Längsrillen durchgängig sind, das heißt: sie erstrecken sich vorzugsweise von einem Ende des jeweiligen Rohres bis zum gegenüberliegenden Ende.

Hinsichtlich der Herstellung der Vorform für die Hohlkernfaser wird die oben angegebene technische Aufgabe ausgehend von einem Verfahren der eingangs genannten Gattung erfindungsgemäß dadurch gelöst, dass die Bildung der Antiresonanzelement-Vorstufen die Ausbildung langgestreckter Druckkammern umfasst, die jeweils im Bereich der Soll-Positionen der Antiresonanzelemente an eine unter Druck und Hitze verformbare Wandung angrenzen, und die bei Durchführung eines Prozesses gemäß Verfahrensschritt (c) infolge von Druck und Hitze eine Ausstülpung eines Abschnitts der verformbaren Wandung in Richtung der Hüllrohr-Innenbohrung unter Bildung eines Antiresonanzelements oder eines Vorläufers dafür bewirken, wobei der Abschnitt der verformbare Wandung als Wandungsabschnitt eines Glasrohres und die Druckkammern jeweils als Hohlkanal ausgelegt sind, an den der Wandungsabschnitt angrenzt.

Die Vorform ist Ausgangspunkt für die Herstellung der Antiresonanten Hohlkernfaser. Durch Elongieren der Vorform wird entweder direkt die Antiresonante Hohlkernfaser gezogen oder es wird zunächst ein Halbzeug erzeugt, aus dem anschließend die Antiresonante Hohlkernfaser gezogen wird. Die Herstellung der Vorform umfasst das Einstülpen von Wandungsabschnitten des Glasrohres im Bereich der Soll-Positionen der Antiresonanzelemente durch Anlegen von Druck in den Druckkammern.

Die umzustülpenden Wandungsabschnitte des Glasrohres sind langgestreckt und verlaufen entlang der Soll-Positionen der Antiresonanzelement-Vorstufen in der Vorform. Die Antiresonanzelement-Vorstufen werden an diesen Positionen in einem Fertigungsschritt erzeugt, indem die betreffenden Wandungsabschnitte in Richtung der Hüllrohr-Innenbohrung durch Anlegen eines von der gegenüberliegenden Wandungsseite wirkenden Drucks umgestülpt werden. Eine Positionierung und Fixierung vorgefertigter Antiresonanzelement-Vorformlingen an den betreffenden Positionen der Hüllrohr-Innenwandung - wie bei der Stack-and-Draw-Technik bekannt - kann so vollständig entfallen oder die Anzahl der so zu positionierenden Antiresonanzelement-Vorformlinge kann zumindest verringert werden. Maßnahmen zur Herstellung der Vorform sind weiter oben im Zusammenhang der Herstellung der Hohlkernfaser erläutert und diese Erläuterungen werden hiermit einbezogen.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

### Antiresonanzelemente

Die Antiresonanzelemente können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem SiO₂, einem Kunststoff, insbesondere aus einem Polymer, aus einem Verbundwerkstoff oder aus kristallinem Material.

### Antiresonanzelement-Vorformlinq / Antiresonanzelement-Vorstufe

Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser werden. Als Antiresonanzelement-Vorstufen werden Bauteile oder Bestandteile der Vorform bezeichnet, die erst durch Umformung zu Antiresonanzelement-Vorformlingen oder direkt zu Antiresonanzelementen werden. Die Antiresonanzelement-Vorformlinge können einfache oder verschachtelte Bauteile sein, an denen zusätzlich Positionierhilfen fixiert sein können. Sie liegen ursprünglich in der primären Vorform (Cane) vor.

Verschachtelte Antiresonanzelement-Vorformlinge bilden in der Hohlkernfaser verschachtelte Antiresonanzelemente. Sie setzen sich zusammen aus einem Außenrohr und mindestens einem weiteren Strukturelement, das in der Innenbohrung des Außenrohres angeordnet ist. Bei dem weiteren Strukturelement kann es sich um ein weiteres Rohr handeln, das an der Innenmantelfläche des Außenrohres anliegt. Das Außenrohr wird hier als "Antiresonanzelement-Außenrohr" oder kurz als "ARE-Außenrohr" bezeichnet, und das weitere Rohr als "verschachteltes Antiresonanzelement-Innenrohr" oder kurz "ARE-Innenrohr".

In der Innenbohrung des verschachtelten ARE-Innenrohres kann bei mehrfach verschachtelten Antiresonanzelement-Vorformlingen mindestens ein weiteres Strukturelement angeordnet sein, beispielsweise ein an der Innenmantelfläche des verschachtelten ARE-Innenrohres anliegendes, drittes Rohr. Um bei mehrfach verschachtelten Antiresonanzelement-Vorformlingen zwischen den mehreren Rohren zu unterscheiden, die innerhalb des Antiresonanzelement-Außenrohres angeordnet sind, wird hier das innerste Rohr auch als "inneres verschachteltes ARE-Innenrohr" und das äußere Rohr auch als "äußeres verschachteltes ARE-Innenrohr" bezeichnet.

Der Begriff "Querschnitt" in Verbindung mit zylinderförmigen Antiresonanzelement-Vorformlingen und deren zylinderförmigen Strukturelementen bezeichnet stets den Querschnitt senkrecht zur jeweiligen Zylinderlängsachse, und zwar - sofern nichts anderes angegeben - bei rohrförmigen Bauteilen den Querschnitt der Außenkontur (nicht: den Querschnitt der Innenkontur).

Durch Weiterverarbeitung der primären Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen. Die veränderte Form wird hier ebenfalls als Antiresonanzelement-Vorformling oder auch als Antiresonanzelement-Vorstufe bezeichnet.

### Vorform / primäre Vorform / sekundäre Vorform

Die Vorform ist dasjenige Bauteil, aus dem die Antiresonante Hohlkernfaser gezogen wird. Es ist eine primäre Vorform oder eine durch Weiterverarbeitung der primären Vorform erzeugte sekundäre Vorform. Die Weiterverarbeitung der primären Vorform zu einer sekundären Vorform, aus der die Hohlkernfaser gezogen wird, kann eine einmalige oder wiederholte Durchführung von einem oder mehreren der folgenden Heißformprozesse umfassen:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren.

### Elongieren / Kollabieren

Beim Elongieren wird die primäre Vorform gelängt. Die Längung kann ohne gleichzeitiges Kollabieren erfolgen. Das Elongieren kann maßstäblich erfolgen, so dass sich beispielsweise die Form und Anordnung von Bauteilen oder Bestandteilen der primären Vorform im elongierten Endprodukt widerspiegeln. Beim Elongieren kann die primäre Vorform aber auch nicht-maßstäblich gezogen und ihre Geometrie verändert werden.

Beim Kollabieren wird eine Innenbohrung verengt oder Ringspalte zwischen rohrförmigen Bauteil werden geschlossen oder verengt. Das Kollabieren geht in der Regel mit einem Elongieren einher.

### Hohlkern / Innerer Mantelbereich / Äußerer Mantelbereich

Das Ensemble aus mindestens einem Hüllrohr und darin lose aufgenommenen oder fest fixierten Vorformlingen oder Vorstufen für Antiresonanzelemente wird hier auch als "primäre Vorform" oder "Cane" bezeichnet. Die primäre Vorform (Cane) umfasst den Hohlkern und einen Mantelbereich. Dieser Mantelbereich wird auch als "innerer Mantelbereich" bezeichnet, wenn es auch einen "äußeren Mantelbereich" gibt, der beispielsweise durch Aufkollabieren auf den Cane erzeugt worden ist, und wenn zwischen diesen Mantelbereichen unterschieden werden soll. Die Bezeichnungen "innerer Mantelbereich" und "äußerer Mantelbereich" werden auch für die entsprechenden Bereiche in der Hohlkernfaser oder in Zwischenprodukten genutzt, die durch Weiterverarbeitung der primären Vorform erhalten werden.

Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

### Spanende Bearbeitung

Darunter werden trennende mechanische Fertigungsverfahren zur trennenden Bearbeitung eines Werkstücks verstanden, insbesondere Drehen, Schneiden, Bohren, Sägen, Fräsen und Schleifen. Durch diese Bearbeitung wird eine sich in Richtung der Hüllrohr-Längsachse erstreckende Längsstruktur geschaffen, die als Positionierungshilfe für die Antiresonanzelement-Vorformlinge dient. Die Längsstruktur ist von der Hüllrohr-Innenseite zugänglich; sie kann sich auch bis zur Außenseite durch die gesamte Hüllrohr-Wandung erstrecken.

### Teilchengröße und Teilchenqrößenverteilunq

Teilchengröße und Teilchengrößenverteilung der SiO₂-Partikel werden anhand der D₅₀-Werte charakterisiert. Diese Werte werden aus Partikelgrößen-Verteilungskurven entnommen, die das kumulative Volumen der SiO₂-Partikel in Abhängigkeit von der Partikelgröße zeigen. Die Teilchengrößenverteilungen werden häufig anhand der jeweiligen D₁₀-, D₅₀- und D₉₀-Werte charakterisiert. Dabei kennzeichnet der D₁₀-Wert diejenige Teilchengröße, die von 10% des kumulativen Volumens der SiO₂-Teilchen nicht erreicht wird, und dementsprechend der D₅₀-Wert und der D₉₀-Wert diejenige Partikelgrößen, die von 50% beziehungsweise von 90% des kumulativen Volumens der SiO₂-Partikel nicht erreicht wird. Die Partikelgrößenverteilung wird durch Streulicht- und Laserbeugungsspektroskopie nach ISO 13320 ermittelt.

### Ausführungsbeispiel

Nachfolgend wird die Erfindung anhand eines Ausführungsbeispiels und einer Zeichnung näher erläutert. Im Einzelnen zeigt in schematischer Darstellung
- **Figur 1**: eine erste Ausführungsform eines mit Längsschlitzen versehenen Zwischenrohres zum Einsatz im erfindungsgemäßen Verfahren in einer Seitenansicht (a) und in einer Draufsicht (b) auf einen Querschnitt,
- **Figur 2**: Verfahrensschritte zur Herstellung einer Vorform (b) für eine Hohlkernfasern unter Einsatz eines Rohr-Ensembles (a) mit mehreren geschlitzten Zwischenrohren anhand eines ersten Beispiels,
- **Figur 3**: das Faserziehen der Vorform von Figur 3 zu einer Hohlkernfaser unter Bildung von Antiresonanzelementen bei einem Ausschnitt der Vorform von Figur 2(b) in vergrößerter Darstellung,
- **Figur 4**: eine zweite Ausführungsform eines mit Längsschlitzen versehenen Zwischenrohres in einer Seitenansicht (a) und in einer Draufsicht (b) auf einen Querschnitt,
- **Figur 5**: Verfahrensschritte zur Herstellung einer Vorform (b) für eine Hohlkernfasern unter Einsatz eines Rohr-Ensembles (a) mit einem geschlitzten Zwischenrohr anhand eines zweiten Beispiels,
- **Figur 6**: das Faserziehen der Vorform von Figur 5 zu einer Hohlkernfaser unter Bildung von Antiresonanzelementen bei einem Ausschnitt der Vorform von Figur 5(b) in vergrößerter Darstellung, und
- **Figur 7**: eine koaxiale Anordnung eines Glasrohres mit thermisch verformbarer Wandung, die Hohlkanäle enthält und einem Überfangzylinder in einer Draufsicht.

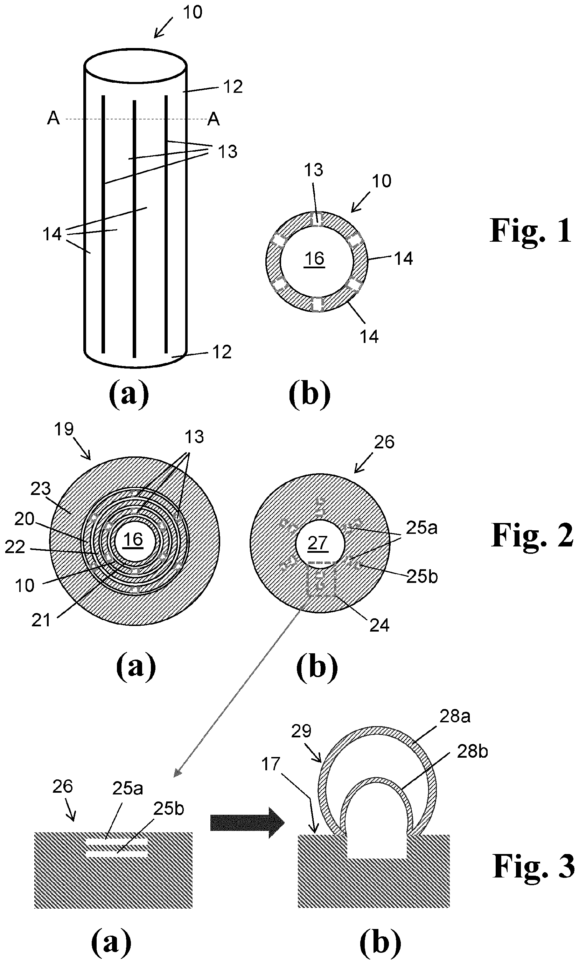

Figur 1(a) zeigt ein Zwischenrohr 10, in dessen Wandung an zuvor definierten azimutalen Positionen im gleichmäßigen Abstand langestreckte Längsschlitze 13 eingeschnitten sind, beispielsweise mittels mechanischer Säge, Wasserstrahlschneiden, Laser oder dergleichen. Die Längsschlitze 13 dienen zur Ausbildung von Antiresonanzelementen in der fertigen Hohlkernfaser beziehungsweise zur Ausbildung von Antiresonanzelement-Vorformlingen in einer Faser-Vorform,, und die Anzahl der Längsschlitze 13 entspricht der Anzahl der mit dem betreffenden Zwischenrohr 10 erzeugbaren Antiresonanzelement-Vorformlinge beziehungsweise Antiresonanzelemente. Im Ausführungsbeispiel sind es sechs Antiresonanzelement-Vorformlinge beziehungsweise Antiresonanzelemente. Die Längsschlitze 13 enden vor den Rohrenden, so dass die stirnseitigen Endbereiche 12 weiterhin umlaufend geschlossen bleiben und die verbleibenden Stege 14 miteinander verbinden. Anschließend werden die Schnittkanten verglast. Die Schnittbreite der Längsschlitze 13 ist einheitlich und beträgt 2 mm.

Aus der Draufsicht auf den Querschnitt des Zwischenrohres 10 entlang der Schnittlinie A-A in Figur 1(b) ist erkennbar, dass die sechs Längsschlitze 13 um die Rohrwandung gleichmäßig verteilt sind, und dass sie sich durchgängig von der Zwischenrohr-Außenwand zur -Innenwand bis zur Innenbohrung 16 erstrecken.

**Figur 2(a)** zeigt schematisch eine Draufsicht auf eine koaxiale Anordnung 19 von insgesamt fünf Quarzglas-Rohren, darunter zwei Zwischenrohre 10; 20 jeweils mit den Längsschlitzen 13. Die koaxiale Rohranordnung 19 setzt sich aus zwei koaxialen Stapeln zusammen, die sich jeweils zusammensetzen aus einem zu verformenden Glasrohr (21; 22), einem Zwischenrohr (10; 20) und einem Hüllrohr (22; 23). Das Rohr mit der Bezugsziffer 22 hat eine Doppelfunktion: im inneren Stapel bildet es ein Hüllrohr und seine Wandung wird Bestandteil der Wandung von Hohlkanälen, und im äußeren Stapel bildet es ein "Glasrohr" mit einer zu verformenden Wandung.

Details zu Abmessungen und Werkstoffen der Rohre sind in nachfolgender Tabelle 1 zusammengefasst:

**Tabelle 1**

| **BZ** | **Bezeichnung / Funktion** | **Innendurchmesser** | **Außendurchmesser** | **Werkstoff** |
|---|---|---|---|---|
| 21 | zu verformendes Glasrohr | 21 | 24 | F-dotiert; F320 |
| 10 | Zwischenrohr | 25 | 31,5 | undotiert; |
| 22 | zu verformendes Glasrohr / Hüllrohr | 32,5 | 34 | F-dotiert; F320 |
| 20 | Zwischenrohr | 35 | 39 | undotiert |
| 23 | Hüllrohr | 40 | 60 | undotiert |

| | | | | |
|---|---|---|---|---|
| BZ: Bezugsziffer in Figur 2a F-dotiert; F320: mit Fluor dotiertes Quarzglas / niedrige Viskosität Undotiert: undotiertes Quarzglas / hohe Viskosität | | | | |

Die eingesetzten Werkstoffe unterscheiden sich hierbei hinsichtlich ihrer Viskosität. Die unbearbeiteten Rohre 21 und 22 bestehen aus einem handelsüblichen, mit Fluor dotierten Quarzglas (Handelsname: F320) und haben eine niedrigere Viskosität als die geschlitzten Zwischenrohre 10, 20 und das äußerste Hüllrohr 23 (Überfangrohr).

**Figur 2(b)** zeigt, dass das koaxiale Rohrensemble 19 anschließend zu einer Vorform 26 kollabiert und dabei gleichzeitig gelängt wird. Dabei verschwinden die Ringspalte zwischen den Rohren und diese werden fest miteinander verbunden. Aus den Längsschlitzen 13 der geschlitzten Zwischenrohre 10; 20 entstehen dabei Hohlkanäle, die als vordere und hintere Druckkammern 25a; 25b beim anschließenden Faserziehprozess verwendet werden können. Dabei liegen jeweils zwei Druckkammern 25a, 25b in radialer Richtung gesehen paarweise hintereinander. Vor dem Faserziehprozess wird mindestens einer der geschlossenen, Längsschlitz-freien Endbereiche der primären Vorform 26 entfernt, so dass in die Drucckammern 25a, 25b ein Druckgas eingeleitet werden kann. Die primäre Vorform 26 hat einen hohlen Kernbereich 27, der von einem Mantel umgeben ist. Die

Druckammern 25a; 25b bilden Vorstufen für Antiresonanzelemente der zu ziehenden Hohlkernfaser.

Der in **Figur 3(a)** gezeigte Ausschnitt 24 aus Figur 2(b) zeigt die aus den ursprünglichen Längsschlitzen erzeugten Druckkammern 25a; 25b in einer Vergrö-βerung. Beim Faserziehen der so erhaltenen Vorform wird ein Differenzdruck zwischen den Druckkammern 25a, 25b und der Innenbohrung 16 angelegt, so dass die an die Druckkammern 25a; 25b angrenzenden Wandungsbereiche entlang der Druckkammern 25a, 25b nach innen aufgeblasen werden.

**Figur 3(b)** zeigt, dass dabei bei der Hohlkernfaser 29 an der Innenseite 27 des ehemaligen innersten Glasrohres eine erste Ausbeulung 28a entsteht, die eine zweite Ausbeulung 28b umschließt. Die erste und zweite Ausbeulung 28a; 28b bilden ein verschachteltes Antiresonanzelement mit zwei Glasmembranen mit negativ gekrümmter Oberfläche.

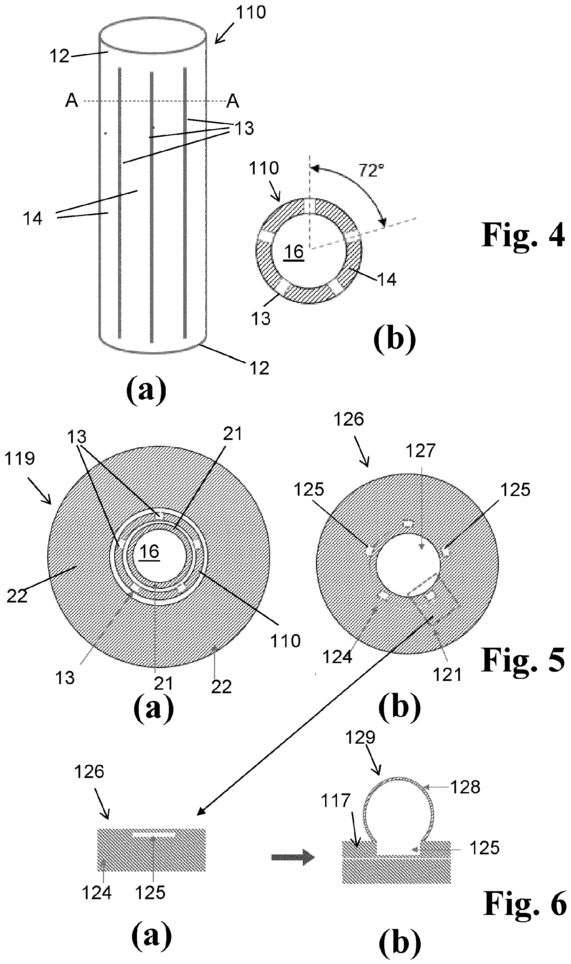

Sofern in der nachfolgenden Beschreibung der Figuren 4 bis 7 die gleichen Bezugsziffern verwendet werden wie bei den Figuren 1 bis 3, so sind damit gleiche oder äquivalente Bauteile oder Bestandteile bezeichnet, wie sie oben anhand dieser Figuren näher erläutert sind.

**Figur 4(a)** zeigt ein anderes Zwischenrohr 110, in dessen Wandung an zuvor definierten azimutalen Positionen im gleichmäßigen Abstand langestreckte Längsschlitze 13 eingeschnitten sind, beispielsweise mittels mechanischer Säge, Wasserstrahlschneiden, Laser oder dergleichen. Die Längsschlitze 13 dienen zur Ausbildung von Antiresonanzelementen in der fertigen Hohlkernfaser beziehungsweise zur Ausbildung von Antiresonanzelement-Vorformlingen in einer Faser-Vorform und die Anzahl der Längsschlitze 13 entspricht der Anzahl der mit dem betreffenden Zwischenrohr 10 erzeugbaren Antiresonanzelement-Vorformlinge beziehungsweise Antiresonanzelemente. Im Ausführungsbeispiel sind es fünf Antiresonanzelement-Vorformlinge beziehungsweise Antiresonanzelemente. Die Längsschlitze 13 enden vor den Rohrenden, so dass die stirnseitigen Endbereiche 12 weiterhin umlaufend geschlossen bleiben und die verbleibenden Stege 14 miteinander verbinden. Anschließend werden die Schnittkanten verglast. Die Schnittbreite der Längsschlitze 13 ist einheitlich und beträgt 2 mm.

Aus der Draufsicht auf den Querschnitt des Zwischenrohres 110 entlang der Schnittlinie A-A in **Figur 4(b)** ist erkennbar, dass die fünf Längsschlitze 13 um die Rohrwandung gleichmäßig mit einem Umfangswinkel von 72 Grad verteilt sind, und dass sie sich durchgängig von der Zwischenrohr-Außenwand zur -Innenwand bis zur Innenbohrung 16 erstrecken.

**Figur 5(a)** zeigt schematisch eine Draufsicht auf eine koaxiale Anordnung 119 von insgesamt drei Quarzglas-Rohren, darunter dem geschlitzten Zwischenrohr 110. Die koaxiale Rohranordnung 119 setzt sich zusammen aus einem zu verformenden Glasrohr 21 dem Zwischenrohr 110 mit den Längsschlitzen 13 und einem Hüllrohr 22.

Details zu Abmessungen und Werkstoffen der Rohre sind in nachfolgender Tabelle 2 zusammengefasst:

**Tabelle 2**

| **BZ** | **Bezeichnung / Funktion** | **Innendurchmesser [mm]** | **Außendurchmesser [mm]** | **Werkstoff** |
|---|---|---|---|---|
| 21 | zu verformendes Glasrohr | 21 | 24 | F-dotiert; F320 |
| 110 | Zwischenrohr | 25 | 31,5 | undotiert; |
| 22 | Hüllrohr | 32,5 | 60 | Undotiert |

| | | | | |
|---|---|---|---|---|
| BZ: Bezugsziffer in Figur 5a F-dotiert; F320: mit Fluor dotiertes Quarzglas / niedrige Viskosität Undotiert: undotiertes Quarzglas / hohe Viskosität | | | | |

Die eingesetzten Werkstoffe unterscheiden sich hierbei hinsichtlich ihrer Viskosität. Das mechanisch unbearbeitete Rohr 21 besteht aus einem handelsüblichen, mit Fluor dotierten Quarzglas (Handelsname: F320) und hat eine niedrigere Viskosität als das geschlitzte Zwischenrohr 110 und das Hüllrohr 22 (Überfangrohr).

**Figur 5(b)** zeigt, dass das koaxiale Rohrensemble 119 anschließend zu einer primären Vorform 126 kollabiert. Dabei wird es gleichzeitig gelängt und die Ringspalte zwischen den Rohren 21,110, 22 verschwinden, so dass diese fest miteinander verbunden werden. Aus den Längsschlitzen 13 des geschlitzten Zwischenrohres 110 entstehen dabei Hohlkanäle, die als Druckkammern 125 beim anschließenden Faserziehprozess verwendet werden können. Die primäre Vorform 126 hat einen hohlen Kernbereich 127, der von einem Mantel 124 umgeben ist.

Die Druckammern 125 bilden Vorstufen für Antiresonanzelemente im Mantelbereich der zu ziehenden Hohlkernfaser.

Vor dem Faserziehprozess wird mindestens einer der geschlossenen, Längsschlitz-freien Endbereiche der Vorform 126 entfernt, so dass in die Druckkammern 125 ein Druckgas eingeleitet werden kann.

Der in **Figur 6(a)** gezeigte Ausschnitt 121 aus Figur 5(b) zeigt eine aus einem ursprünglichen Längsschlitz 13 erzeugte Druckkammer 125 in einer Vergrößerung. Beim Faserziehen der so erhaltenen Vorform 126 wird ein Differenzdruck zwischen den Druckkammern 125 und der Innenbohrung 16 angelegt, so dass der an die Druckkammern 125 angrenzende Wandungsbereich entlang der Druckkammer 125 nach innen aufgeblasen wird.

**Figur 6(b)** zeigt, dass dabei bei der Hohlkernfaser 129 an der Innenseite 17 des ehemaligen Glasrohres eine Ausbeulung 128 entsteht, die ein Antiresonanzelement mit einer Glasmembran mit negativ gekrümmter Oberfläche bildet.

Anstelle der Längsschlitze 13 können die Zwischenrohre 10, 20 110 auch mit Längsrillen an ihrer Innenmantelfläche versehen sein. Die Längsrillen werden gegebenenfalls durch mechanisches Fräsen in der Innenmantelfläche des Zwischenrohres erzeugt.

Anstelle der mit Längsschlitzen oder Längsrillen versehenen Zwischenrohre oder ergänzend dazu können auch die Glasrohre 21; 22 mit thermisch verformbarer Wandung mit Längsrillen an ihrer Außenmantelfläche versehen sein. Die Längsrillen werden gegebenenfalls durch mechanisches Fräsen in der Außenmantelfläche des Glasrohres erzeugt.

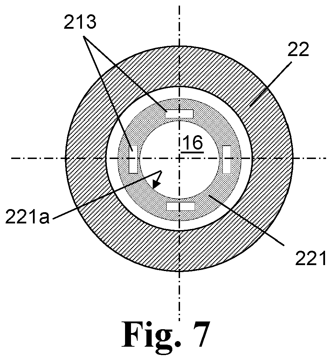

Anstelle der oben genannten Ausführungsformen von Glasrohren und/oder Zwischenrohren mit Längsschlitzen oder Längsrillen oder ergänzend dazu können auch die Glasrohre 21; 22 mit thermisch verformbarer Wandung mit Hohlkanälen versehen sein. Dafür zeigt **Figur 7** schematisch ein Ausführungsbeispiel. Die koaxiale Anordnung umfasst ein Glasrohr 221 mit thermisch verformbarer Wandung und einen Überfangzylinder 22. Innerhalb der Wandung des Glasrohres 221 und nahe an der Innenmantelfläche 221a verlaufen vier um den Umfang gleichmäßig verteilte Hohlkanäle 213 parallel zur Glasrohr-Längsachse (erstreckt sich senkrecht zur Papierebene). Die Hohlkanäle 213 sind durch Laserschneiden erzeugt und durchgängig (sie erstrecken sich von einem Ende der Wandung bis zum anderen Ende). Im gezeigten Querschnitt haben sie Rechteckform, wobei die lange Rechteckseite tangential zum benachbarten Wandungsabschnitt der Innenmantelfläche 221a verläuft.

Auf ein Zwischenrohr kann bei dieser Ausführungsform verzichtet werden. Details zu Abmessungen und Werkstoffen der Rohre sind in nachfolgender Tabelle 3 zusammengefasst:

**Tabelle 3**

| **BZ** | **Bezeichnung / Funktion** | **Innendurchmesser [mm]** | **Außendurchmesser [mm]** | **Werkstoff** |
|---|---|---|---|---|
| 221 | zu verformendes Glasrohr | 21 | 24 | F-dotiert; F320 |
| 22 | Hüllrohr | 25 | 60 | undotiert |

| | | | | |
|---|---|---|---|---|
| BZ: Bezugsziffer in Figur 7 F-dotiert; F320: mit Fluor dotiertes Quarzglas / niedrige Viskosität Undotiert: undotiertes Quarzglas / hohe Viskosität | | | | |

Bei der Durchführung eines Heißformprozesses kann in den Hohlkanälen 213 durch Einleiten eines Druckgases ein Innendruck erzeugt, und dadurch die Wandungsabschnitte des Glasrohres 221, die die Hohlkanäle 213 nach innen begrenzen, verformt werden. Dabei bilden sich nach innen - in Richtung auf die Glasrohr-Innenbohrung 16 weisende, längliche Ausbuchtungen am Glasrohr 221, die als Antiresonanzelement-Vorformlinge dienen.

## Patentansprüche

1. Verfahren zur Herstellung einer Antiresonanten Hohlkernfaser (29; 129), die einen sich entlang einer Faser-Längsachse erstreckenden Hohlkern und einen den Hohlkern umgebenden Mantelbereich, der eine Anzahl von Antiresonanzelementen umfasst, mit den Verfahrensschritten:
(a) Bereitstellen einer primären Vorform (26; 126) für die Hohlkernfaser, die mindestens ein Hüllrohr, das eine Hüllrohr-Innenbohrung und eine Hüllrohr-Längsachse aufweist, entlang der sich eine von einer Innenseite und einer Außenseite begrenzte Hüllrohr-Wandung (24; 124) erstreckt,
(b) Bildung einer Anzahl von Vorstufen (25a; 25b; 125; 213) für Antiresonanzelemente (28a; 28b; 128) an Soll-Positionen der Hüllrohr-Wandung (24; 124), und
(c) Elongieren der primären Vorform (26; 126) zu der Hohlkernfaser (29; 129) oder Weiterverarbeitung der primären Vorform (26; 126) zu einer sekundären Vorform, aus der die Hohlkernfaser gezogen wird, wobei die Weiterverarbeitung eine einmalige oder wiederholte Durchführung von einem oder mehreren der folgenden Heißformprozesse umfasst:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren,
**dadurch gekennzeichnet, dass** die Bildung der Antiresonanzelement-Vorstufen (25a; 25b; 125; 213) die Ausbildung langgestreckter Druckkammern (25a; 25b; 125; 213) umfasst, die jeweils im Bereich der Soll-Positionen der Antiresonanzelemente (28a; 28b; 128) an eine unter Druck und Hitze verformbare Wandung angrenzen, und die bei Durchführung eines Prozesses gemäß Verfahrensschritt (c) infolge von Druck und Hitze eine Ausstülpung eines Abschnitts der verformbaren Wandung (21; 22) in Richtung der Hüllrohr-Innenbohrung (16) unter Bildung eines Antiresonanzelements (29; 129) oder eines Vorläufers dafür bewirken, wobei der Abschnitt der verformbaren Wandung als Wandungsabschnitt eines Glasrohres (21; 221) und die Druckkammern jeweils als Hohlkanal (13; 25a; 25b; 125; 213) ausgelegt sind, an den der Wandungsabschnitt des Glasrohres (21; 221) angrenzt.

2. Verfahren nach Anspruch 1, **dadurch gekennzeichnet, dass** die Hohlkanäle (213) innerhalb der Rohrwandung des Glasrohres (221) gebildet werden, die parallel zur Glasrohr-Längsachse verlaufen.

3. Verfahren nach Anspruch 2, **dadurch gekennzeichnet, dass** eine koaxiale Rohr-Anordnung gebildet wird, umfassend eine innere periphere Reihe von Hohlkanälen in der Rohrwandung eines inneren Glasrohres und eine äu-βere periphere Reihe von Hohlkanälen in der Rohrwandung eines äußeren Glasrohres, wobei die Hohlkanäle der inneren und der äußeren peripheren Reihe in radialer Richtung gesehen auf einer gemeinsamen Verbindungslinie liegen und durch mindestens eine peripher umlaufende und nach innen verformbare Glaswandung räumlich voneinander getrennt sind.

4. Verfahren nach Anspruch 1, **dadurch gekennzeichnet, dass** die Ausbildung der Hohlkanäle (13; 25a; 25b; 125) eine Maßnahme umfasst, bei der zwischen dem Glasrohr (21) und einem Außenrohr (22; 23) ein Zwischenrohr (10; 20) angeordnet wird, das eine Zwischenrohr-Längsachse aufweist, entlang der sich eine von einer Innenseite und einer Außenseite begrenzte Zwischenrohr-Wandung erstreckt, und dass in der Zwischenrohr-Wandung Längsschlitze (13) eingebracht sind, wobei aus den Längsschlitzen (13) bei Durchführung eines Prozesses gemäß Verfahrensschritt (c) jeweils ein Hohlkanal (25a; 25b; 125) gebildet wird, über die in einem späteren Fertigungsschritt Druck auf die Außenseite des Glasrohres (21) aufgebracht werden kann, um erweichtes Material des Glasrohres (21) in Richtung auf dessen Innenbohrung umzustülpen.

5. Verfahren nach Anspruch 4, **dadurch gekennzeichnet, dass** ein Zwischenrohr (10; 20) mit kreisrundem Innenquerschnitt bereitgestellt und spanend bearbeitet wird.

6. Verfahren nach Anspruch 4 oder 5, **dadurch gekennzeichnet, dass** das Zwischenrohr (10; 20) stirnseitige Enden aufweist, und dass die Längsschlitze (13) vor den stirnseitigen Enden enden.

7. Verfahren nach einem der Ansprüche 4 bis 6, **dadurch gekennzeichnet, dass** eine koaxiale Rohr-Anordnung (19) gebildet wird, umfassend ein inneres Glasrohr (21), ein inneres Zwischenrohr (10), ein inneres Außenrohr (22), das gleichzeitig ein äußeres Glasrohr (22) bildet, ein äußeres Zwischenrohr (20) und ein äußeres Außenrohr (23), wobei die Längsschlitze (13) des inneren und des äußeren Zwischenrohres (10; 20) in radialer Richtung auf einer gemeinsamen Verbindungslinie liegen und durch mindestens eine peripher umlaufende und nach innen verformbare Glaswandung räumlich voneinander getrennt sind.

8. Verfahren nach Anspruch 1 **dadurch gekennzeichnet, dass** die Ausbildung der Hohlkanäle eine Maßnahme umfasst, bei der ein Glasrohr eingesetzt wird, das eine Glasrohr-Außenmantelfläche aufweist, in die Längsrillen eingebracht sind, die parallel zu Glasrohr-Längsachse verlaufen, und dass ein Zwischenrohr eingesetzt wird, welches das Glasrohr koaxial umgibt, wobei an der Zwischenrohr-Innenmantelfläche Längsrillen eingebracht sind, die die parallel zu der Zwischenrohr-Längsachse verlaufen, wobei aus den Längsrillen bei Durchführung eines Prozesses gemäß Verfahrensschritt (c) Hohlkanäle gebildet werden.

9. Verfahren nach einem der Ansprüche 4 bis 8, **dadurch gekennzeichnet, dass** die Längsschlitze (13) beziehungsweise die Längsrillen durch spanende Bearbeitung, insbesondere durch Schneiden, Bohren, Sägen, Fräsen oder Schleifen, erzeugt werden.

10. Verfahren nach einem der Ansprüche 4 bis 9, **dadurch gekennzeichnet, dass** die Längsschlitze (13) und/oder Längsrillen Längskanten aufweisen und dass die Längskanten durch Erweichen, vorzugsweise bei gleichzeitiger Längung, mit umgebendem Glasmaterial verschmolzen werden.

11. Verfahren nach einem der Ansprüche 1 bis 10, **dadurch gekennzeichnet, dass** das Glasrohr (21; 22) aus einem Glas besteht, das einen die Viskosität absenkenden Dotierstoff enthält.

12. Verfahren zur Herstellung einer Vorform für eine Antiresonante Hohlkernfaser, die einen sich entlang einer Faser-Längsachse erstreckenden Hohlkern und den Hohlkern umgebenden Mantelbereich aufweist, der mehrere Antiresonanzelemente umfasst, mit den Verfahrensschritten:
(a) Bereitstellen einer primären Vorform (26; 126) für die Hohlkernfaser, die mindestens ein Hüllrohr, das eine Hüllrohr-Innenbohrung und eine Hüllrohr-Längsachse aufweist, entlang der sich eine von einer Innenseite und einer Außenseite begrenzte Hüllrohr-Wandung (24; 124) erstreckt,
(b) Bildung einer Anzahl von Vorstufen (25a; 25b; 125; 213) für Antiresonanzelemente (28a; 28b; 128) an Soll-Positionen der Hüllrohr-Wandung (24; 124),
(c) Optionale Weiterverarbeitung der primären Vorform (26; 126) zu einer sekundären Vorform für die Hohlkernfaser, wobei die Weiterverarbeitung eine einmalige oder wiederholte Durchführung von einem oder mehreren der folgenden Heißformprozesse umfasst:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren,
**dadurch gekennzeichnet, dass** die Bildung der Antiresonanzelement-Vorstufen (25a; 25b; 125; 213) die Ausbildung langgestreckter Druckkammern (25a; 25b; 125; 213) umfasst, die jeweils im Bereich der Soll-Positionen der Antiresonanzelemente (28a; 28b; 128) an eine unter Druck und Hitze verformbare Wandung angrenzen, und die bei Durchführung eines Prozesses gemäß Verfahrensschritt (c) infolge von Druck und Hitze eine Ausstülpung eines Abschnitts der verformbaren Wandung in Richtung der Hüllrohr-Innenbohrung (16) unter Bildung eines Antiresonanzelements (29; 129) oder eines Vorläufers dafür bewirken, wobei der Abschnitt der verformbare Wandung als Wandungsabschnitt eines Glasrohres (21; 221) und die Drucckammern jeweils als Hohlkanal (13; 25a; 25b; 125; 213) ausgelegt sind, an den der Wandungsabschnitt angrenzt.

## Claims

1. A method for producing an anti-resonant hollow-core fiber (29; 129) which comprises a hollow core extending along a longitudinal axis of the fiber and a casing region that surrounds the hollow core and comprises a number of anti-resonance elements, comprising the method steps of:
(a) providing a primary preform (26; 126) for the hollow-core fiber, which preform has at least one cladding tube comprising a cladding tube inner bore and a cladding tube longitudinal axis along which a cladding tube wall (24; 124) delimited by an inner side and an outer side extends,
(b) forming a number of precursors (25a; 25b; 125; 213) for anti-resonance elements (28a; 28b; 128) at target positions of the cladding tube wall (24; 124), and
(c) elongating the primary preform (26; 126) to form the hollow-core fiber (29; 129) or further processing the primary preform (26; 126) to form a secondary preform from which the hollow-core fiber is drawn, wherein the further processing comprises carrying out one or more of the following hot-forming processes once or repeatedly:
(i) elongation,
(ii) collapse,
(iii) collapse and simultaneous elongation,
(iv) collapse of additional casing material,
(v) collapse of additional casing material and subsequent elongation,
(vi) collapse of additional casing material and simultaneous elongation,
**characterized in that** the formation of the anti-resonance element precursors (25a; 25b; 125; 213) comprises the formation of elongated pressure chambers (25a; 25b; 125; 213) which each, in the region of the target positions of the anti-resonance elements (28a; 28b; 128), adjoin a wall deformable under pressure and heat, and which, as a result of pressure and heat, when a process according to method step (c) is carried out, cause a bulge of a portion of the deformable wall (21; 22) in the direction of the cladding tube inner bore (16) so as to form an anti-resonance element (29; 129) or a precursor therefor, wherein the portion of the deformable wall is designed as a wall portion of a glass tube (21; 221) and the pressure chambers are each designed as a hollow channel (13; 25a; 25b; 125; 213) which the wall portion of the glass tube (21; 221) adjoins.

2. The method according to claim 1, **characterized in that** the hollow channels (213) are formed within the tube wall of the glass tube (221) and extend parallel to the longitudinal axis of the glass tube.

3. The method according to claim 2, **characterized in that** a coaxial tube assembly is formed, comprising an inner peripheral row of hollow channels in the tube wall of an inner glass tube and an outer peripheral row of hollow channels in the tube wall of an outer glass tube, wherein the hollow channels of the inner and the outer peripheral row lie, as seen in the radial direction, on a common connecting line and are spatially separated from one another by at least one peripherally extending and inwardly deformable glass wall.

4. The method according to claim 1, **characterized in that** the formation of the hollow channels (13; 25a; 25b; 125) comprises a measure in which an intermediate tube (10; 20) is arranged between the glass tube (21) and an outer tube (22; 23), which intermediate tube comprises an intermediate tube longitudinal axis along which an intermediate tube wall delimited by an inner side and an outer side extends, and **in that** longitudinal slots (13) are introduced in the intermediate tube wall, wherein, when a process according to method step (c) is carried out, a hollow channel (25a; 25b; 125) is formed from each of the longitudinal slots (13), via which channels, in a later manufacturing step, pressure can be applied to the outer side of the glass tube (21) in order to cause softened material of the glass tube (21) to bulge in the direction of its inner bore.

5. The method according to claim 4, **characterized in that** an intermediate tube (10; 20) having a circular inner cross-section is provided and machined.

6. The method according to either claim 4 or claim 5, **characterized in that** the intermediate tube (10; 20) comprises end faces, and **in that** the longitudinal slots (13) end before the end faces.

7. The method according to any of claims 4 to 6, **characterized in that** a coaxial tube arrangement (19) is formed, comprising an inner glass tube (21), an inner intermediate tube (10), an inner outer tube (22), which simultaneously forms an outer glass tube (22), an outer intermediate tube (20) and an outer outer tube (23), wherein the longitudinal slots (13) of the inner and the outer intermediate tube (10; 20) lie, in the radial direction, on a common connecting line and are spatially separated from one another by at least one peripherally extending and inwardly deformable glass wall.

8. The method according to claim 1, **characterized in that** the formation of the hollow channels comprises a measure in which a glass tube is used which has a glass tube outer casing surface into which longitudinal grooves are introduced which extend parallel to the glass tube longitudinal axis, and **in that** an intermediate tube is used which coaxially surrounds the glass tube, wherein longitudinal grooves which extend parallel to the intermediate tube longitudinal axis are introduced on the intermediate tube inner casing surface, wherein hollow channels are formed from the longitudinal grooves when a process according to method step (c) is carried out.

9. The method according to any of claims 4 to 8, **characterized in that** the longitudinal slots (13) or the longitudinal grooves are produced by machining, in particular by cutting, drilling, sawing, milling or grinding.

10. The method according to any of claims 4 to 9, **characterized in that** the longitudinal slots (13) and/or longitudinal grooves have longitudinal edges and **in that** the longitudinal edges are fused with surrounding glass material by softening, preferably with simultaneous lengthening.

11. The method according to any of claims 1 to 10, **characterized in that** the glass tube (21; 22) consists of a glass containing a dopant that decreases viscosity.

12. A method for producing a preform for an anti-resonant hollow-core fiber which comprises a hollow core extending along a longitudinal axis of the fiber and a casing region that surrounds the hollow core and comprises a number of anti-resonance elements, comprising the method steps of:
(a) providing a primary preform (26; 126) for the hollow-core fiber, which preform has at least one cladding tube comprising a cladding tube inner bore and a cladding tube longitudinal axis along which a cladding tube wall (24; 124) delimited by an inner side and an outer side extends,
(b) forming a number of precursors (25a; 25b; 125; 213) for anti-resonance elements (28a; 28b; 128) at target positions of the cladding tube wall (24; 124),
(c) optionally further processing the primary preform (26; 126) to form a secondary preform for the hollow-core fiber, wherein the further processing comprises carrying out one or more of the following hot-forming processes once or repeatedly:
(i) elongation,
(ii) collapse,
(iii) collapse and simultaneous elongation,
(iv) collapse of additional casing material,
(v) collapse of additional casing material and subsequent elongation,
(vi) collapse of additional casing material and simultaneous elongation,
**characterized in that** the formation of the anti-resonance element precursors (25a; 25b; 125; 213) comprises the formation of elongated pressure chambers (25a; 25b; 125; 213) which each, in the region of the target positions of the anti-resonance elements (28a; 28b; 128), adjoin a wall deformable under pressure and heat, and which, as a result of pressure and heat, when a process according to method step (c) is carried out, cause a bulge of a portion of the deformable wall in the direction of the cladding tube inner bore (16) so as to form an anti-resonance element (29; 129) or a precursor therefor, wherein the portion of the deformable wall is designed as a wall portion of a glass tube (21; 221) and the pressure chambers are each designed as a hollow channel (13; 25a; 25b; 125; 213) which the wall portion adjoins.

## Revendications

1. Procédé de fabrication d'une fibre à coeur creux (29 ; 129) antirésonante qui présente un coeur creux s'étendant le long d'un axe longitudinal de fibre et une zone enveloppante entourant le coeur creux, laquelle comprend un certain nombre d'éléments antirésonance, comportant les étapes de procédé consistant à :
(a) fournir une préforme primaire (26 ; 126) pour la fibre à coeur creux, laquelle préforme au moins un tuyau de gaine qui présente un trou interne de tuyau de gaine et un axe longitudinal de tuyau de gaine le long duquel s'étend une paroi de tuyau de gaine (24 ; 124) délimitée par une face interne et une face externe,
(b) former un certain nombre de précurseurs (25a ; 25b ; 125 ; 213) pour les éléments antirésonance (28a ; 28b ; 128) à des positions de consigne de la paroi de tuyau de gaine (24 ; 124), et
(c) allonger la préforme primaire (26 ; 126) en fibre à coeur creux (29 ; 129) ou transformer ultérieurement la préforme primaire (26 ; 126) en une préforme secondaire à partir de laquelle la fibre à coeur creux est étirée, dans lequel la transformation ultérieure comprend la réalisation unique ou répétée d'un ou de plusieurs des processus de thermoformage suivants :
(i) allongement,
(ii) écrasement,
(iii) écrasement et allongement simultané,
(iv) écrasement de matériau enveloppant supplémentaire,
(v) écrasement de matériau enveloppant supplémentaire et allongement consécutif,
(vi) écrasement de matériau enveloppant supplémentaire et allongement simultané,
**caractérisé en ce que** la formation des précurseurs d'éléments antirésonance (25a ; 25b ; 125 ; 213) comprend la formation de chambres de pression (25a ; 25b ; 125 ; 213) allongées, lesquelles sont respectivement adjacentes, dans la zone des positions de consigne des éléments antirésonance (28a ; 28b ; 128), à une paroi déformable sous l'action de la pression et de la chaleur, et lesquelles provoquent, lors de la réalisation d'un processus selon l'étape de procédé (c), sous l'effet de la pression et de la chaleur, une protubérance d'une section de la paroi (21 ; 22) déformable dans le sens du trou interne de tuyau de gaine (16) pour former un élément antirésonance (29 ; 129) ou un précurseur pour celui-ci, dans lequel la section de la paroi déformable est conçue comme une section de paroi d'un tuyau en verre (21 ; 221) et les chambres de pression sont respectivement conçues comme un canal creux (13 ; 25a ; 25b ; 125 ; 213) adjacent à la section de paroi du tuyau en verre (21 ; 221).

2. Procédé selon la revendication 1, **caractérisé en ce que** les canaux creux (213) sont formés au sein de la paroi de tuyau du tuyau en verre (221), lesquels canaux creux s'étendent parallèlement à l'axe longitudinal de tuyau en verre.

3. Procédé selon la revendication 2, **caractérisé en ce qu'**un agencement de tuyaux coaxial est formé, comprenant une série périphérique intérieure de canaux creux dans la paroi de tuyau d'un tuyau en verre intérieur et une série périphérique extérieure de canaux creux dans la paroi de tuyau d'un tuyau en verre extérieur, dans lequel les canaux creux des séries périphériques intérieure et extérieure, vus dans le sens radial, se trouvent sur une ligne de liaison commune et sont séparés spatialement les uns des autres par au moins une paroi en verre à enveloppement périphérique et déformable vers l'intérieur.

4. Procédé selon la revendication 1, **caractérisé en ce que** la formation des canaux creux (13 ; 25a ; 25b ; 125) comprend une mesure lors de laquelle un tuyau intermédiaire (10 ; 20) est disposé entre le tuyau en verre (21) et un tuyau externe (22 ; 23), lequel tuyau intermédiaire présente un axe longitudinal de tuyau intermédiaire le long duquel s'étend une paroi de tuyau intermédiaire délimitée par une face interne et une face externe, et **en ce que** des fentes longitudinales (13) sont ménagées dans la paroi de tuyau intermédiaire, dans lequel, à partir des fentes longitudinales (13), respectivement un canal creux (25a ; 25b ; 125) est formé lors de la réalisation d'un processus selon l'étape de procédé (c), par l'intermédiaire desquels canaux creux, dans une étape de production ultérieure, une pression peut être appliquée sur la face externe du tuyau en verre (21) pour retourner le matériau ramolli du tuyau en verre (21) dans le sens du trou interne de celui-ci.

5. Procédé selon la revendication 4, **caractérisé en ce qu'**un tuyau intermédiaire (10 ; 20) est fourni et usiné par enlèvement de copeaux avec une section transversale interne circulaire.

6. Procédé selon la revendication 4 ou 5, **caractérisé en ce que** le tuyau intermédiaire (10 ; 20) présente des extrémités frontales, et **en ce que** les fentes longitudinales (13) s'arrêtent avant les extrémités frontales.

7. Procédé selon l'une des revendications 4 à 6, **caractérisé en ce qu'**un agencement de tuyaux coaxial (19) est formé, comprenant un tuyau en verre intérieur (21), un tuyau intermédiaire intérieur (10), un tuyau externe intérieur (22) qui forme en même temps un tuyau en verre extérieur (22), un tuyau intermédiaire extérieur (20) et un tuyau externe extérieur (23), dans lequel les fentes longitudinales (13) des tuyaux intermédiaires intérieur et extérieur (10 ; 20) se trouvent sur une ligne de liaison commune dans le sens radial et sont séparées spatialement les unes des autres par au moins une paroi en verre à enveloppement périphérique et déformable vers l'intérieur.

8. Procédé selon la revendication 1, **caractérisé en ce que** la formation des canaux creux comprend une mesure lors de laquelle un tuyau en verre est utilisé, lequel tuyau en verre présente une surface d'enveloppe externe de tuyau en verre dans laquelle des rainures longitudinales sont ménagées, lesquelles s'étendent parallèlement à l'axe longitudinal de tuyau en verre, et **en ce qu'**un tuyau intermédiaire est utilisé, lequel entoure de manière coaxiale le tuyau en verre, dans lequel des rainures longitudinales sont ménagées sur la surface d'enveloppe interne de tuyau intermédiaire, lesquelles rainures longitudinales s'étendent parallèlement à l'axe longitudinal de tuyau intermédiaire, dans lequel, à partir des rainures longitudinales, des canaux creux sont formés lors de la réalisation d'un processus selon l'étape de procédé (c).

9. Procédé selon l'une des revendications 4 à 8, **caractérisé en ce que** les fentes longitudinales (13) ou les rainures longitudinales sont produites par usinage par enlèvement de copeaux, en particulier par découpage, perçage, sciage, fraisage ou ponçage.

10. Procédé selon l'une des revendications 4 à 9, **caractérisé en ce que** les fentes longitudinales (13) et/ou les rainures longitudinales présentent des bords longitudinaux et **en ce que** les bords longitudinaux sont fusionnés par ramollissement, de préférence par allongement concomitant, à l'aide d'un matériau vitreux qui entoure.

11. Procédé selon l'une des revendications 1 à 10, **caractérisé en ce que** le tuyau en verre (21 ; 22) est constitué d'un verre qui contient une substance dopante abaissant la viscosité.

12. Procédé de fabrication d'une préforme pour une fibre à coeur creux antirésonante qui présente un coeur creux s'étendant le long d'un axe longitudinal de fibre et une zone enveloppante entourant le coeur creux, laquelle zone enveloppante comprend plusieurs éléments antirésonance, comportant les étapes de procédé consistant à :
(a) fournir une préforme primaire (26 ; 126) pour la fibre à coeur creux, laquelle préforme au moins un tuyau de gaine qui présente un trou interne de tuyau de gaine et un axe longitudinal de tuyau de gaine le long duquel s'étend une paroi de tuyau de gaine (24 ; 124) délimitée par une face interne et une face externe,
(b) former un certain nombre de précurseurs (25a ; 25b ; 125 ; 213) pour les éléments antirésonance (28a ; 28b ; 128) à des positions de consigne de la paroi de tuyau de gaine (24 ; 124),
(c) éventuellement, transformer ultérieurement la préforme primaire (26 ; 126) en une préforme secondaire pour la fibre à coeur creux, dans lequel la transformation ultérieure comprend la réalisation unique ou répétée d'un ou de plusieurs des processus de thermoformage suivants :
(i) allongement,
(ii) écrasement,
(iii) écrasement et allongement simultané,
(iv) écrasement de matériau enveloppant supplémentaire,
(v) écrasement de matériau enveloppant supplémentaire et allongement consécutif,
(vi) écrasement de matériau enveloppant supplémentaire et allongement simultané,
**caractérisé en ce que** la formation des précurseurs d'éléments antirésonance (25a ; 25b ; 125 ; 213) comprend la formation de chambres de pression (25a ; 25b ; 125 ; 213) allongées, lesquelles sont respectivement adjacentes, dans la zone des positions de consigne des éléments antirésonance (28a ; 28b ; 128), à une paroi déformable sous l'action de la pression et de la chaleur, et lesquelles provoquent, lors de la réalisation d'un processus selon l'étape de procédé (c), sous l'effet de la pression et de la chaleur, une protubérance d'une section de la paroi déformable dans le sens du trou interne de tuyau de gaine (16) pour former un élément antirésonance (29 ; 129) ou un précurseur pour celui-ci, dans lequel la section de la paroi déformable est conçue comme une section de paroi d'un tuyau en verre (21 ; 221) et les chambres de pression sont respectivement conçues comme un canal creux (13 ; 25a ; 25b ; 125 ; 213) adjacent à la section de paroi.
